# EUROPEAN PATENT SPECIFICATION

(11) **EP 0 582 326 B1**
(45) Date of publication and mention of the grant of the patent: **10.02.1999**
(21) Application number: 93201865.8
(22) Date of filing: 28.06.1993
(51) Int. Cl.: B23D 51/10

(54) **Saw-blade fixation device**
Sägeblattfestspannvorrichtung
Dispositif de fixation d'une lame de scie

(30) Priority: 29.07.1992 NL 9201371
(43) Date of publication of application: 09.02.1994
(73) Proprietor: SKIL EUROPE B.V., NL-4825 BD Breda (NL)
(72) Inventor: Quirijnen, Antonius Jacobus Johannus, NL-5124 ND Molenschot (NL)
(74) Representative: Eveleens Maarse, Pieter

(56) References cited:
- FR-A- 2 257 376
- US-A- 3 555 678
- US-A- 4 601 477

## Description

The present invention relates to a device for fixing a saw-blade provided with an opening to a carrier which is connected to a drive device to make a reciprocating movement.

Such devices are generally known. Such known devices are often applied for example in power jigsaws or so-called all-purpose saws.

The connection between saw-blade and carrier in these fixation devices forming part of the prior art is mostly embodied in that an element presses the saw-blade against the carrier by means of a screw connection. Guide edges are usually arranged to determine the correct position of the saw-blade on the carrier.

The use of a screw makes it necessary to emply a screwdriver or a socket head wrench to fix a saw-blade in the saw or to remove a saw-blade thereform. When using electrical hand tools the use of a screwdriver or the like is of course less desirable; there is the danger of this tool being misplaced and the use thereof is time-consuming.

US-A-3,555,678 discloses a device for fixing a saw blade provided with an opening to a carrier which is connected to a drive device to make a reciprocating movement, and comprising a wall extending in the direction of movement and which is suitable for contact with a side of the saw blade; a fixation body located opposite the wall and being rotatable around a shaft extending perpendicularly of the direction of movement and parallel to the wall and which is provided with a protrusion which is movable into the opening in the saw blade; and urging means for urging the fixation body to a fixation position wherein the protrusion extends into the opening in the saw blade. Although this document discloses a fixation device with which the saw-blade is well fixed on a carrier capable of performing a reciprocating movement, and wherein no extra tool is necessary for fitting or removing the saw-blade, it has the drawback that this fixation device transfers the forces from the saw-blade to the carrier through the shaft, leading to rapid wear if used in a power saw.

The aim of the invention is to avoid this drawback.

This object is achieved in that the shaft is located such that the projection of it's axis onto the wall is within the opening in the saw blade in its fixed position, and that the protrusion is fit for pressing the saw blade against the wall. The friction provides in an at least partial transfer of the forces through friction.

Other steps which improve the practical value of the fixing device are disclosed in the appended claims.

The present invention will now be elucidated with reference to the included embodiments, in which:
fig. 1 shows a perspective, partially broken away view of a fixation device according to the present invention;
fig. 2 shows a cross sectional view of the fixation device depicted in fig. 1;
fig. 3 is a side view of the fixation device shown in fig. 1;
fig. 4 shows a cross section of a second embodiment of the fixation device shown in fig. 1; and
fig. 5 shows a cross section of a variant of the embodiment shown in figures 1-3.

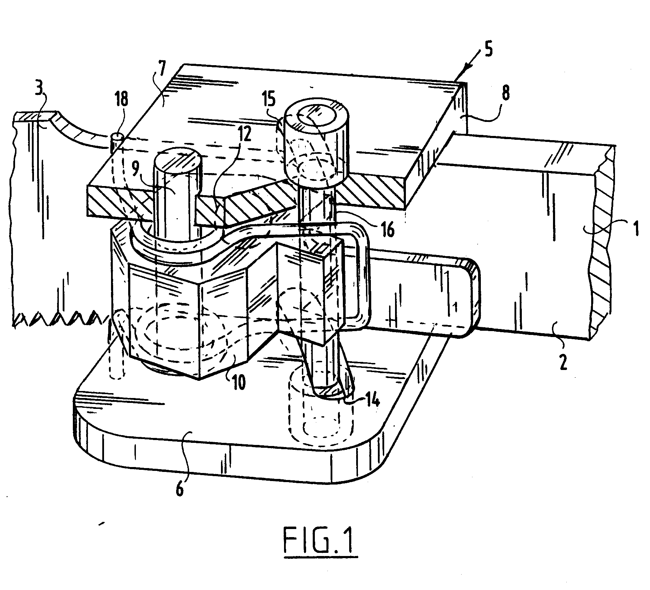

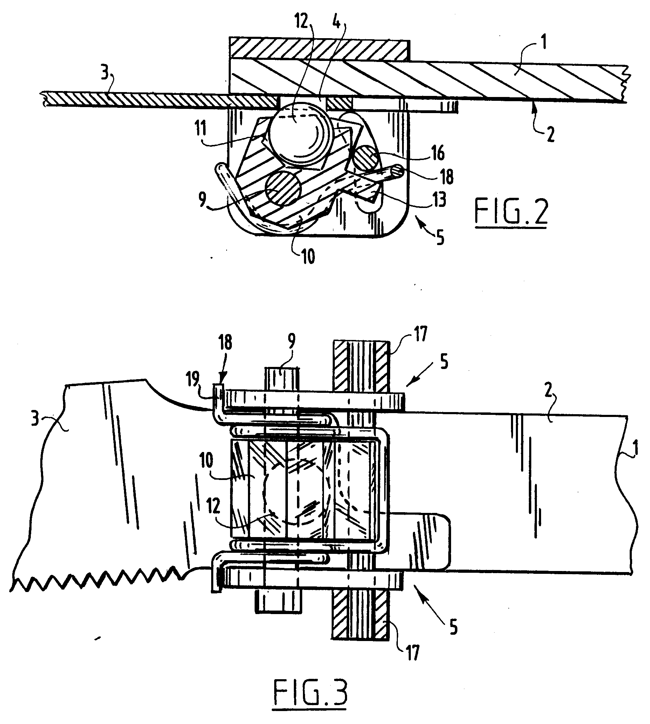

Depicted in figures 1, 2 and 3 is a carrier 1 which is connected to a drive device (not shown in the drawing) which is constructed and connected to the carrier such that the carrier 1 can perform a reciprocating movement. The carrier 1 comprises a wall 2 against which a saw-blade 3 can be positioned.

The saw-blade 3 is provided with an opening 4. Although it is recommended that a round opening be applied, this is in no way necessary; it is possible to use a differently shaped opening.

A U-shaped bracket 5 is fixed to the carrier 1. The U-shaped bracket comprises two side pieces 6, 7 which are placed mutually opposite and which are connected by a back portion 8. Arranged in each of the side pieces 6,7 is an opening through which extends a shaft 9. The back portion can also be formed by the carrier 1.

A fixation body 10 is fixed on the shaft. The fixation body has a prismatic form and is provided with a cavity 11 in which is situated a clamping body 12 embodied in the present embodiment as a sphere. The fixation body is further provided with a protrusion 13.

In each of the side pieces 6, 7 is arranged a slot 14 and 15 respectively. An actuating rod 16 extends through the slots 14, 15. For fixation purposes sleeves 17 are clamped onto both ends of the actuating rod 16. The design of the slots 14, 15 is otherwise such that the actuating rod 16 is always enclosed by the fixation body 10 and the protrusion 13 thereof.

A spring 18 wound from wire is further arranged. The spring extends from the end 19 which lies against the upper side piece 7 to the shaft 9, is wound approximately one and a half times therearound, then extends up against the actuating rod 16, is bent downward and again extends along the actuating rod 16 to the shaft 9, is again wound one and a half times therearound and finally ends against the lower side piece 6. The winding direction and the dimensions of the spring are selected such that the spring exerts a force on the actuating rod 16 such that this is urged in the slot towards the carrier 1. Instead of this spring construction it is of course possible to apply other spring configurations.

The operation of this device will now be described.

With the embodiment shown in figures 1, 2 and 3, in the position in which no saw-blade is enclosed the actuating rod 16 is urged by the spring 18 into contact with the contact surface 20 of the fixation body 10. Since the fixation body 10 can move freely, it is pushed aside.

When a saw-blade is introduced, it will be pushed from the left-hand side between the sphere 12 and the carrier 1. To make insertion possible the actuating rod 16 is moved manually counter to the spring pressure, whereby the fixation body 10 with the sphere 12 can rotate freely and the saw-blade 3 can be inserted.

The insertion movement is continued until the sphere 12 falls into the cavity 4. This can be felt via the saw-blade, whereafter the user can release the actuating lever 16 and this is urged by the spring pressure into contact with the contact surface 20. Fixation herein takes place because via the sphere 12 the saw-blade generates a moment in clockwise direction relative to the shaft 9. This moment is counteracted by a moment that is generated by the friction between the actuating rod 16 and the contact surface 20.

Because the contact surface 20 and the path that the actuating rod 16 can traverse are for a large part parallel, the friction force is so great that it exceeds the moment generated by the saw-blade so that the device can withstand shocks endured by the saw-blade, for example when the saw jams. It is important here that the angle enclosed between the contact surface 20 and the path to be traversed by the actuating rod 16 is very small so that the friction force which is in any case a normal force forms for the greater part a transverse force on the path. This force is thus absorbed by the right-hand edge of the slots 14 and 15.

Fixation thus takes place in the following manner. When the saw-blade 3 is subjected to forces which pull the saw-blade 3 out of the fixation device, the clamping body 12 is rotated together with the fixation body 10 by the saw-blade 3 such that the clamping body 12 presses the saw-blade 3 against the carrier 1. The clamping action is thus reinforced and it is impossible for the saw-blade to be moved outward.

Conversely, if the saw-blade 3 is subjected to a force which pushes the saw-blade 3 inward, an attempt is then made to rotate the fixation body 10 toward the actuating rod 16. However, this is prevented by the friction force between the surfaces 20 in contact of the fixation body 10 and the actuating rod 16. As a result of the shapes and position of the slots 14, 15, the rod 16 can only move substantially parallel to the contact surface. Fixation thus also takes place in this direction.

When the fixing mechanism must be released, the actuating rod 16 only has to be removed manually from the contact surface 20, which is easily done because, as stated, the friction force is a normal force, and the fixation body 11 is released. It is then easy to remove the saw-blade.

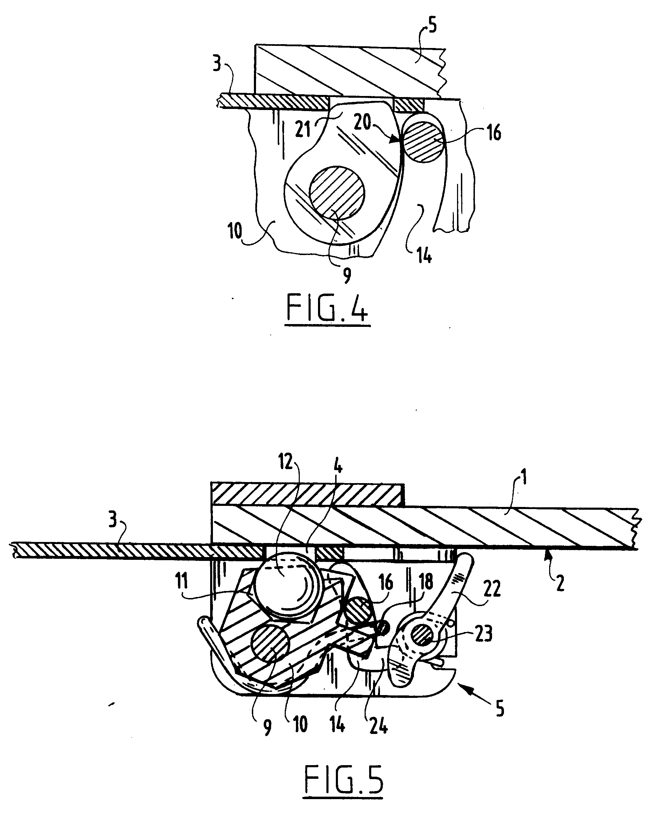

In the above described embodiment a separate sphere is described which is freely rotatable in the fixation body 11. It is however also possible to fix a protrusion on the fixation body which assumes the function of the sphere. Such an embodiment is shown in fig. 4. Herein the fixation body 10, which takes a slightly more rounded form in this embodiment, is provided with a protrusion 21. The essential difference lies in the fact that the protrusion cannot rotate relative to the fixation body; this drawback can be minimized by a suitable design, choice of material and, perhaps, lubrication.

This embodiment otherwise corresponds with the embodiment shown in figures 1, 2 and 3.

Finally, fig. 5 shows an embodiment wherein the fixation of the saw-blade takes place automatically. For this purpose a lever 22 is arranged which is rotatably disposed relative to the U-shaped bracket 5 by means of a shaft 23. The bottom slot 14 is further provided with an extension 24 into which the actuating rod 16 can be moved. The lever 22 extends into the vicinity of the carrier 1, while the other side of the lever 22 extends over the extension 24. In the starting position the actuating rod 16 is in the extension 24 of the slot 14. The fixation body 10 is thus unlocked and the saw-blade can be inserted. When the saw-blade has been inserted far enough it touches the lever 22 which will rotate relative to the bracket 5 and which will press the actuating lever 16 out of the extension 24 into the slot 14, whereafter it is urged into the fixation position by means of spring pressure generated by the spring 18 and a situation is obtained which has already been described with reference to fig. 1-3.

When the saw-blade is taken out, the lever 16 is moved manually into the recess 24, whereby the fixation body 10 is released, and the lever 22 is actuated whereby the saw-blade 3 is ejected.

A spring is otherwise arranged which urges the lever 22 to the position in which the saw-blade is ejected.

## Claims

1. Device for fixing a saw blade (3) provided with an opening (4) to a carrier (1) which is connected to a drive device to make a reciprocating movement, and comprising:
- a wall (2) extending in the direction of movement and which is suitable for contact with a side of the saw blade (3);
- a fixation body (10,12) located opposite the wall (2) and being rotatable around a shaft (9) extending perpendicularly of the direction of movement and parallel to the wall (2) and which is provided with a protrusion (12) which is movable into the opening (4) in the saw blade (3); and
- urging means (16,17,18,19) for urging the fixation body (10,12) to a fixation position wherein the protrusion (12) extends into the opening (4) in the saw blade (3),
**characterized in that** the shaft (9) is located such that the projection of it's axis onto the wall (2) is within the opening (4) in the saw blade (3) in its fixed position, and that the protrusion is fit for pressing the saw blade (3) against the wall (2).

2. Device as claimed in claim 1, **characterized in that** the protrusion (12) is at least partially spherical and that the dimension of the opening (4) arranged in the saw-blade (3) is smaller in the direction of movement than the diameter of the at least partially spherical protrusion (12).

3. Device as claimed in claim 1 or 2, **characterized in that** the protrusion (12) forms part of a clamping body that is arranged at least partially in a cavity (11) present in the fixation body (10), and which is urged by means of spring pressure into the opening (4) arranged in the saw-blade (3).

4. Device as claimed in claim 1 or 2, **characterized in that** the fixation body (10) is fixed onto a shaft (9) extending transversely of the direction of movement and parallel to the wall (2), which shaft (9) is bearing mounted in a U-shaped frame (5) which is attached with its rear side to the wall (2).

5. Device as claimed in claim 4, **characterized in that** the urging means (16; 18, 19) are formed by an actuating body (16, 17) movable along a path (14, 15) in substantially tangential direction relative to the shaft (9), and that the path (14, 15) runs such that the actuating body (16, 17) touches the fixation body (10) when the latter is in the fixation position and the fixation body (10, 13) is subjected to a friction force from the actuating body (16, 17) such that forces exerted by the saw-blade (3) have no effect on the position of the fixation body (10, 13).

6. Device as claimed in claim 5, **characterized in that** the actuating body (16, 17) is formed by a pin (16) which extends through slots (14, 15) arranged in each of the legs of the U-shaped frame (5), which slots (14, 15) extend substantially parallel to the contact surface (20) of the fixation body (21, 13).

7. Device as claimed in claim 6, **characterized in that** the slots (14, 15) are curved and that the contact surface (20) of the fixation body (21) is curved, wherein both radii of curvature differ little.

8. Device as claimed in claim 6 or 7, **characterized in that** an element (18, 19) is arranged which urges the pin (16, 17) to the position in which it touches the fixation body (10, 21).

9. Device as claimed in claim 5, 6, 7 or 8, **characterized in that** the actuating member (16, 17) can assume a rest position lying outside the path (14, 15), and that a lever (22) is arranged which extends into the path of the saw-blade and which pushes the actuating member (16, 17) from its rest position into its path (14, 15) when the saw-blade (3) is pulled in.

## Patentansprüche

1. Vorrichtung zum Befestigen eines mit einer Öffnung (4) versehenen Sägeblattes (3) an einem Träger (1), der mit einer Antriebsvorrichtung zum Ausführen einer Hin- und Herbewegung verbunden ist, aufweisend:
- eine Wand (2), die sich in der Bewegungsrichtung erstreckt und die zum Anlegen an eine Seite des Sägeblattes (3) geeignet ist;
- einen Befestigungsaufbau (10, 12), der der Wand (2) gegenüberstehend angeordnet ist und um eine Achse (9) schwenkbar ist, die sich senkrecht zu der Bewegungsrichtung und parallel zu der Wand (2) erstreckt, und der mit einem Vorsprung (12) versehen ist, der in die Öffnung (4) in dem Sägeblatt (3) bewegbar ist; und
- eine Zwingvorrichtung (16, 17, 18, 19) zum Zwingen des Befestigungsaufbaus (10, 12) in eine Befestigungslage, wobei der Vorsprung (12) sich in die Öffnung (4) in dem Sägeblatt (3) erstreckt,
dadurch gekennzeichnet, daß die Achse (9) derart angeordnet ist, daß die Projektion von deren Achslinie auf die Wand (2) hin innerhalb der Öffnung (4) in dem Sägeblatt (3) in dessen befestigter Stellung liegt und daß der Vorsprung dazu angepaßt ist, das Sägeblatt gegen die Wand zu pressen.

2. Vorrichtung gemäß Anspruch 1, dadurch gekennzeichnet, daß der Vorsprung (12) zumindest teilweise kugelförmig ist und die Abmessung der in dem Sägeblatt (3) ausgebildeten Öffnung (4) in der Bewegungsrichtung kleiner als der Durchmesser des zumindest teilweise kugelförmig ausgebildeten Vorsprungs (12) ist.

3. Vorrichtung gemäß Anspruch 1 oder 2, dadurch gekennzeichnet, daß der Vorsprung (12) einen Teil einer Klemmvorrichtung bildet, die zumindest teilweise in einer in dem Befestigungsaufbau (10) vorhandenen Ausnehmung (11) angeordnet ist und die von einer Federkraft in die in dem Sägeblatt (3) ausgebildete Öffnung (4) gedrückt wird.

4. Vorrichtung gemäß Anspruch 1 oder 2, dadurch gekennzeichnet, daß der Befestigungsaufbau (10) an einer Achse/Welle (9) befestigt ist, die sich quer zu der Bewegungsrichtung und parallel zu der Wand (2) erstreckt, wobei die Achse (9) gelagert an einem U-förmigen Klammerbauteil (5) befestigt ist, das mit seinem Rückenteil an der Wand (2) angebracht ist.

5. Vorrichtung gemäß Anspruch 4, dadurch gekennzeichnet, daß die Zwingmittel (16, 17, 18) von einem Betätigungsaufbau (16, 17) gebildet sind, der entlang einer Bahn (14, 15) in im wesentlichen tangentialer Richtung bezüglich der Achse (9) bewegbar ist, und die Bahn derart verläuft, daß der Betätigungsaufbau (16, 17) den Befestigungsaufbau (10) berührt, wenn dieser in der Befestigungsstellung ist, und der Befestigungsaufbau (10, 13) einer Reibungskraft seitens des Betätigungsaufbaus (16, 17) ausgesetzt ist, so daß von dem Sägeblatt (3) ausgeübte Kräfte keine Auswirkung auf die Stellung des Befestigungsaufbaus (10, 13) haben.

6. Vorrichtung gemäß Anspruch 5, dadurch gekennzeichnet, daß der Betätigungsaufbau (16, 17) von einem Stab (16) gebildet ist, der sich durch Schlitze (14, 15) erstreckt, von denen je einer in jedem der Schenkel des U-förmigen Klammerbauteils (5) angeordnet ist, wobei die Schlitze (14, 15) sich im wesentlichen parallel zu der Kontaktoberfläche (20) des Befestigungsaufbaus (21, 13) erstrecken.

7. Vorrichtung gemäß Anspruch 6, dadurch gekennzeichnet, daß die Schlitze (14, 15) bogenförmig ausgebildet sind und das die Kontaktoberfläche (20) des Befestigungsaufbaus (21) bogenförmig ausgebildet ist, wobei die beiden Krümmungsradien sich wenig voneinander unterscheiden.

8. Vorrichtung gemäß Anspruch 6 oder 7, dadurch gekennzeichnet, daß ein Bauteil (18, 19) vorgesehen ist, das den Stab (16, 17) in die Stellung zwingt, in der dieser den Befestigungsaufbau (10, 21) berührt.

9. Vorrichtung gemäß einem der Ansprüche 5 bis 8, dadurch gekennzeichnet, daß das Betätigungsbauteil (16, 17) eine Ruhestellung außerhalb der Bahn (14, 15) einnehmen kann, und daß ein Hebel (22) vorgesehen ist, der sich bis in den Weg des Sägeblattes erstreckt und das Betätigungsbauteil (16, 17) von dessen Ruhestellung in dessen Bahn (14, 15) drückt, wenn das Sägeblatt (3) eingeschoben wird.

## Revendications

1. Dispositif de fixation d'une lame de scie (3) ayant une ouverture (4) tournée vers un organe de support (1) qui est raccordé à un appareil d'entraînement provoquant un mouvement alternatif, et comprenant :
- une paroi (2) disposée dans la direction de déplacement et qui peut être au contact d'un côté de la lame de scie (3),
- un corps de fixation (10, 12) placé en face de la paroi (2) et qui peut tourner autour d'un arbre (9) disposé perpendiculairement à la direction de déplacement et parallèlement à la paroi (2) et qui a une saillie (12) mobile dans l'ouverture (4) formée dans la lame de scie (3), et
- un dispositif de rappel (16, 17, 18, 19) destiné à rappeler le corps de fixation (10, 12) vers une position de fixation dans laquelle la saillie (12) s'étend dans l'ouverture (4) de la lame de scie (3), caractérisé en ce que l'arbre (9) est disposé afin que la projection de son axe sur la paroi (2) se trouve dans l'ouverture (4) de la lame de scie (3) dans sa position fixe, et en ce que la saillie est destinée à exercer une pression sur la lame de scie (3) contre la paroi (2).

2. Dispositif selon la revendication 1, caractérisé en ce que la saillie (12) est au moins partiellement sphérique, et la dimension de l'ouverture (4) disposée dans la lame de scie (3) est plus petite dans la direction de déplacement que le diamètre de la saillie au moins partiellement sphérique (12).

3. Dispositif selon la revendication 1 ou 2, caractérisé en ce que la saillie (12) fait partie d'un corps de serrage qui est placé au moins partiellement dans une cavité (11) présente dans le corps de fixation (10) et qui est rappelé par une pression élastique dans l'ouverture (4) disposée dans la lame de scie (3).

4. Dispositif selon la revendication 1 ou 2, caractérisé en ce que le corps de fixation (10) est fixé sur l'arbre (9) qui s'étend transversalement à la direction de déplacement et parallèlement à la paroi (2), l'arbre (9) étant monté par un palier dans une équerre en U (5) qui est fixée par sa face arrière à la paroi (2).

5. Dispositif selon la revendication 4, caractérisé en ce que le dispositif de rappel (16 ; 18, 19) est formé par un corps de manoeuvre (16, 17) mobile le long d'un trajet (14, 15) en direction pratiquement tangente à l'arbre (9), et le trajet (14, 15) est disposé de manière que le corps de manoeuvre (16, 17) touche le corps de fixation (10) lorsque ce dernier est en position de fixation et le corps de fixation (10, 13) est soumis à une force de frottement due au corps de manoeuvre (16, 17) si bien que les forces exercées par la lame de scie (3) n'ont pas d'effet sur la position du corps de fixation (10, 13).

6. Dispositif selon la revendication 5, caractérisé en ce que le corps de manoeuvre (16, 17) est formé par une broche (16) passant dans des fentes (14, 15) disposées dans chacune des branches de l'équerre en U (5), les fentes (14, 15) étant pratiquement parallèles à la surface de contact (20) du corps de fixation (21, 13).

7. Dispositif selon la revendication 6, caractérisé en ce que les fentes (14, 15) sont courbes, et la surface de contact (20) du corps de fixation (21) est courbe, les rayons de courbure différant peu.

8. Dispositif selon la revendication 6 ou 7, caractérisé en ce qu'un élément (18, 19) est destiné à rappeler la broche (16, 17) vers la position dans laquelle elle touche le corps de fixation (10, 21).

9. Dispositif selon la revendication 5, 6, 7 ou 8, caractérisé en ce que l'organe de manoeuvre (16, 17) peut prendre une position de repose qui se trouve en dehors du trajet (14, 15), et en ce qu'un levier (22) est disposé afin qu'il s'étende sur le trajet de la lame de scie et qu'il repousse l'organe de manoeuvre (16, 17) de sa position de repos dans ledit trajet (14, 15) lorsque la lame de scie (3) est tirée vers l'intérieur.
